## Europäisches Patentamt

## European Patent Office

## Office européen des brevets

(19)

(11) Veröffentlichungsnummer: **0 086 464**
**B1**

(12) ## EUROPÄISCHE PATENTSCHRIFT

(45) Veröffentlichungstag der Patentschrift:
27.12.84

(51) Int. Cl.³: **H 04 N 9/16,** H 04 N 5/68

(21) Anmeldenummer: 83101290.1

(22) Anmeldetag: 10.02.83

(54) **Abgleichfreie Ansteuerschaltung für Farbfernseh-Bildröhren.**

(30) Priorität: 11.02.82 DE 3204744

(43) Veröffentlichungstag der Anmeldung:
24.08.83 Patentblatt 83/34

(45) Bekanntmachung des Hinweises auf die Patenterteilung:
27.12.84 Patentblatt 84/52

(84) Benannte Vertragsstaaten:
**AT DE FR GB**

(56) Entgegenhaltungen:
**DE - A - 2 329 898**
**DE - B - 1 762 189**

(73) Patentinhaber: **Siemens Aktiengesellschaft, Berlin und München Wittelsbacherplatz 2, D-8000 München 2 (DE)**

(72) Erfinder: **Haussmann, Wolfgang, Dipl.-Ing., Untersbergstrasse 90, D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine abgleichfreie Ansteuerschaltung für Farbfernsehbildröhren, bei welcher wie einzelnen Farbkomponentensignale jeweils über einen Verstärker dem Steuergitter der Bildröhre zugeführt sind.

In einem Farbfernsehübertragungssystem stellt die Bildröhre das letzte Glied der Übertragungskette dar. Die Bildröhre führt die Umwandlung elektrischer Signale in optische Signale durch. Dieser Umwandlungsprozess erfolgt bisher in einer technisch unbefriedigenden Weise, da die in den derzeit verwandten Schaltungen wirksame Übertragungskennlinie der Bildröhre grössere Toleranzen aufweist.

Zu diesen Toleranzen zählen nicht nur Herstellungstoleranzen, sondern auch zusätzliche Veränderungen, die während des Betriebs durch Erwärmung und Alterung auftreten.

Bei Farbbildröhren müssen diese Toleranzen in geeigneter Weise kompensiert werden, da von den hier notwendigen drei Strahlsystemen für die Grundfarben Rot, Grün und Blau zur Aufrechterhaltung der Farbbalance Gleichlauf gefordert wird.

Bei den bekannten Schaltungstechniken für die Ansteuerung von Farbbildröhren ist bei zumindest zwei der drei Farbkanäle die Möglichkeit gegeben, den sog. Schwarz- und Weisswert einzustellen.

Die Einstellung geschah bisher hauptsächlich manuell, indem beispielsweise zur Schwarzwerteinstellung ein Punkt auf der Bildröhrenkennlinie in der Nähe des Strahlstromeinsatzes gewählt wird. Bei abgeschalteter Vertikalablenkung ergibt sich auf dem Bildschirm ein horizontaler Strich, dessen Farbe so eingestellt wird, dass sich ein möglichst neutrales Grau ergibt. Zur Weisswerteinstellung wird ein Punkt im Bereich des maximalen Strahlstromes gewählt. Hierzu kann beispielsweise das Farbbalkentestbild verwendet werden, wobei die wiedergegebene weisse Fläche auf ein möglichst neutrales Weiss einzustellen ist.

Es existieren bereits auch Schaltungsvorschläge (DE-A Nr. 2329898), welche den Schwarzwertabgleich selbsttätig vornehmen. Hierbei werden z.B. im Bereich der Schwarzschulter innerhalb des FBAS-Signals die Kathodenströme der drei Strahlungssysteme abgetastet und auf einen festgelegten Wert eingeregelt. Diese Schaltung zeigt recht gute Eigenschaften, erfasst aber nur den Schwarzwert und erfordert einen beträchtlichen Aufwand.

Aufgabe der Erfindung ist es, eine abgleichfreie Ansteuerschaltung anzugeben, welche die Bildröhrenkennlinie in einen Regelkreis miteinbezieht und so die Bildröhrentoleranzen auf ein unbedeutendes Mass reduziert.

Diese Aufgabe wird erfindungsgemäss dadurch gelöst, dass das entzerrte Signal jeder einzelnen der Farbkomponenten Rot, Grün, Blau dem nichtinvertierenden Eingang eines Verstärkers zugeführt wird, dass dem invertierenden Eingang des Verstärkers eine dem Istwert des Kathodenstromes proportionale Spannung zugeführt wird, dass im Verstärker der am nichtinvertierenden Eingang anliegende Sollwert mit dem am invertierenden Eingang anliegende Istwert verglichen wird und am Ausgang des Verstärkers ein Signal abgegeben wird, damit die Differenz zwischen Soll- und Istwert möglichst klein ist, und dass das Signal am Ausgang des Verstärkers an das Steuergitter der Bildröhre gelegt ist.

Zweckmässige Ausgestaltungen der erfindungsgemässen Ansteuerschaltung sind in den abhängigen Ansprüchen angeführt.

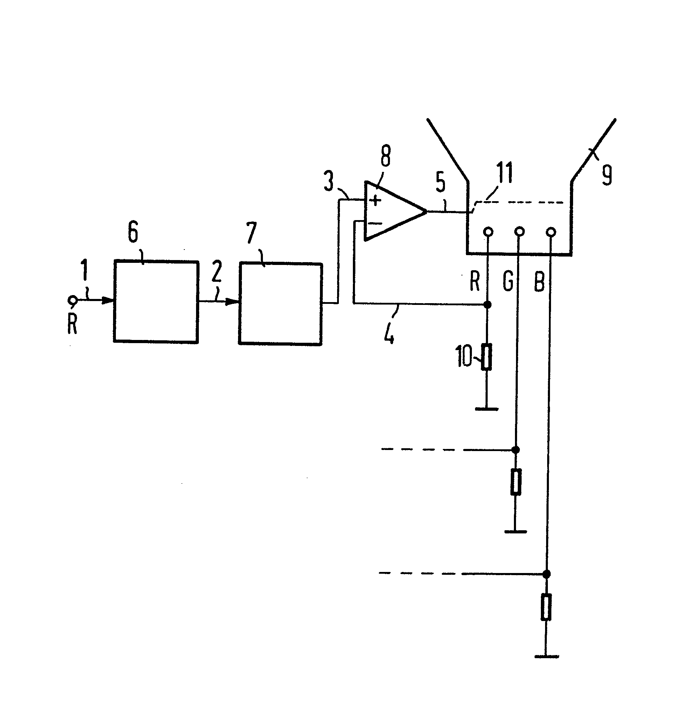

Die Vorteile der erfindungsgemässen Schaltung werden anhand eines in der Zeichnung dargestellten Ausführungsbeispieles erläutert.

In der einzigen Figur ist eine Ausführung dargestellt, bei der die Signale der einzelnen Farbkomponenten Rot, Grün, Blau von einem digitalen System angeliefert werden. Die erfindungsgemässe Ansteuerschaltung arbeitet im Gegensatz zu den üblicherweise verwendeten Spannungssteuerungen mit einer Stromsteuerung. Dadurch wird erreicht, dass sämtliche Bildröhrentoleranzen ohne Wirkung sind, denn der Kathodenstrom wird allein durch die Ansteuerschaltung festgelegt und eingeprägt. Die Krümmung der Bildröhrenkennlinie wird hierbei ebenfalls kompensiert.

Es wird vorausgesetzt, dass das Videosignal sendeseitig vorverzerrt wird über eine Kennlinie, die mathematisch genau der Umkehrfunktion der Bildröhrenkennlinie entspricht. Da das gesamte Übertragungssystem wieder lineares Übertragungsverhalten aufweisen soll, muss bei der stromgesteuerten Betriebsweise der Bildröhre eine künstliche Bildröhrenkennlinie eingefügt werden. Dies kann beispielsweise über ein entsprechend ausgebildetes lineares Netzwerk oder aber, wie in der Figur dargestellt, was bei digitalen Systemen vorteilhaft ist, durch einen Festwertspeicher geschehen.

In der Figur ist dargestellt, dass das digitale Signal der Farbe Rot R über den Eingang 1 die Adresseingänge des Festwertspeichers 6 steuert. Im Festwertspeicher (ROM) 6 ist mathematisch exakt die Umkehrfunktion der sendeseitigen Vorverzerrungskennlinie enthalten.

Am Ausgang 2 des Festwertspeichers 6 liegt somit das entzerrte Signal der Farbe Rot. Mittels eines D/A-Wandlers 7 wird das Ausgangssignal des Speichers 6 in ein Analogsignal umgewandelt, welches den Sollwert für den Verstärker 8 darstellt und auf dessen nichtinvertierenden Eingang 3 geführt ist. Am Widerstand 10 wird eine zum Istwert des Kathodenstroms proportionale Spannung abgegriffen, die den invertierenden Eingang 4 des Verstärkers 8 ansteuert. Im Verstärker 8 wird der Sollwert an Punkt 3 mit dem Istwert an Punkt 4 verglichen, und am Ausgang 5 erscheint ein Signal, bei dem die Differenz zwischen Soll- und Istwert möglichst klein ist. Der Ausgang 5 des Verstärkers 8 steuert direkt das Steuergitter 11 der Farbbildröhre 9 an.

In der Figur ist nur der Schaltungsteil für den Rot-Kanal dargestellt. Für die Kanäle Grün und Blau sind in der erfindungsgemässen Ansteuerschaltung identische Schaltungsteile vorhanden.

Die Vorteile der erfindungsgemässen Ansteuerschaltung bestehen darin, dass weder ein Schwarzwert- noch ein Weisswertabgleich erforderlich sind. Veränderungen der Bildröhrenkennlinie infolge von Temperatureinfluss und Alterung sind ohne Wirkung. Weiterhin kann über das Entzerrungsnetzwerk im Festwertspeicher 6 eine sehr genaue Kompensation der sendeseitigen Vorverzerrung durchgeführt werden.

Die angeführten Vorteile bedeuten nicht nur eine Vereinfachung für die Fertigung und den Service durch Wegfall von Abgleichpunkten, sondern es wird eine weitere Verbesserung der Bildqualität dadurch erreicht, dass in der erfindungsgemässen Schaltung auch Toleranzen in der Steilheit der Strahlsysteme untereinander ausgeglichen werden.

**Patentansprüche**

1. Abgleichfreie Ansteuerschaltung für Farbfernsehbildröhren, bei welcher die einzelnen Farbkomponentensignale jeweils über einen Verstärker dem Steuergitter (11) der Bildröhre zugeführt sind, dadurch gekennzeichnet, dass das entzerrte Signal jeder einzelnen der Farbkomponenten Rot, Grün, Blau dem nichtinvertierenden Eingang (3) des Verstärkers (8) zugeführt wird, dass dem invertierenden Eingang (4) des Verstärkers (8) eine dem Istwert des Kathodenstroms proportionale Spannung zugeführt wird, dass im Verstärker (8) der am nichtinvertierenden Eingang (3) anliegende Sollwert mit dem an invertierenden Eingang (4) anliegende Istwert verglichen wird und am Ausgang (5) des Verstärkers (8) ein Signal abgegeben wird, damit die Differenz zwischen Soll- und Istwert möglichst klein ist, und dass das Signal am Ausgang (5) des Verstärkers (8) an das Steuergitter (11) der Bildröhre (9) gelegt ist.

2. Ansteuerschaltung nach Anspruch 1, dadurch gekennzeichnet, dass die Signale der einzelnen Farbkomponenten durch eine künstliche Bildröhrenkennlinie mittels eines linearen Netzwerkes entzerrt werden.

3. Ansteuerschaltung nach Anspruch 1, dadurch gekennzeichnet, dass digitalisierte Signale jeder einzelnen Farbkomponente einem Festwertspeicher (6) zugeführt werden, in dem die Umkehrfunktion der sendeseitigen Vorverzerrungskennlinie gespeichert ist, und dass das entzerrte Signal (2) über einen D/A-Wandler (7) an den nichtinvertierenden Eingang (3) des Verstärkers (8) gelegt wird.

**Revendications**

1. Circuit de commande sans alignement pour des tubes de télévision en couleurs, dans lequel les différents signaux des composantes des couleurs sont appliqués respectivement, par l'intermédiaire d'un amplificateur, à la grille de commande (11) du tube-image, caractérisé par le fait que le signal de chacune des composantes de couleurs rouge, vert, bleu, dont les distorsions sont corrigées, est envoyé à l'entrée non inverseuse (3) de l'amplificateur (8), qu'une tension proportionnelle à la valeur réelle du courant cathodique est envoyée à l'entrée inverseuse (4) de l'amplificateur (8), que, dans cet amplificateur, la valeur de consigne appliquée à l'entrée non inverseuse (3) est comparée à la valeur réelle appliquée à l'entrée inverseuse (4) et qu'un signal est envoyé à la sortie (5) de l'amplificateur (8) de manière que la différence entre la valeur de consigne et la valeur réelle soit aussi faible que possible, et que le signal présent à la sortie (5) de l'amplificateur (8) est appliqué à la grille de commande (11) du tube-image (9).

2. Circuit de commande suivant la revendication 1, caractérisé par le fait que les distorsions des signaux des différentes composantes des couleurs sont corrigées, grâce à une courbe caractéristique artificielle du tube-image, à l'aide d'un réseau linéaire.

3. Circuit de commande suivant la revendication 1, caractérisé par le fait que des signaux, mis sous forme numérique, des différentes composantes des couleurs sont appliqués à une mémoire morte (6) dans laquelle la fonction inverse de la courbe caractéristique des distorsions préalables présentes côté émission est mémorisée et que le signal (2) dont les distorsions ont été corrigées est appliqué, par l'intermédiaire d'un convertisseur numérique/analogique (7), à l'entrée non inverseuse (3) de l'amplificateur (8).

**Claims**

1. An adjustment-free driving circuit for colour television picture tubes, in which the individual colour component signals are each fed *via* an amplifier to the control grid (11) of the picture tube, characterised in that the corrected signal of each of the individual colour components, red, green and blue is fed to the non-inverting input (3) of an amplifier (8), that the inverting input (4) of the amplifier (8) is fed with a voltage which is proportional to the actual value of the cathode current, that in the amplifier (8) the theoretical value present at the non-inverting input (3) is compared with the actual value present at the inverting input (4), and at the output (5) of the amplifier (8) a signal is emitted in order that the difference between the theoretical value and the actual value should be as small as possible, and that the signal at the output (5) of the amplifier (8) is applied to the control grid (11) of the picture tube (9).

2. A driving circuit as claimed in Claim 1, characterised in that the signals of the individual colour components are corrected through an artificial picture tube curve by means of a linear network.

3. A driving circuit as claimed in Claim 1, characterised in that digitalised signals of each individual colour component are fed to a ROM (6) in which the inverse function of the transmitting-end pre-emphasis curve is stored, and that the corrected signal (2) is applied *via* a D/A converter (7) to the non-inverting input (3) of the amplifier (8).